(19) Europäisches Patentamt
European Patent Office
Office européen des brevets

(11) **EP 4 397 038 B1**

(12) **EUROPEAN PATENT SPECIFICATION**

(45) Date of publication and mention
of the grant of the patent:
**09.04.2025  Bulletin 2025/15**

(21) Application number: **21783643.6**

(22) Date of filing: **03.09.2021**

(51) International Patent Classification (IPC):
*H04N 19/124* (2014.01)    *H04N 19/14* (2014.01)
*H04N 19/146* (2014.01)    *H04N 19/172* (2014.01)
*H04N 19/192* (2014.01)    *H04N 19/196* (2014.01)

(52) Cooperative Patent Classification (CPC):
**H04N 19/124; H04N 19/14; H04N 19/146;
H04N 19/172; H04N 19/192; H04N 19/197**

(86) International application number:
**PCT/US2021/048997**

(87) International publication number:
**WO 2023/033833 (09.03.2023 Gazette 2023/10)**

(54) **A MULTI-TRY ENCODING OPERATION FOR STREAMING APPLICATIONS**

EIN KODIERUNGSVERFAHREN MIT MEHREREN VERSUCHEN FÜR STREAMING-ANWENDUNGEN

UNE OPÉRATION DE CODAGE À TENTATIVES MULTIPLES POUR LES APPLICATIONS EN STREAMING

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.07.2024  Bulletin 2024/28**

(73) Proprietor: **Google LLC
Mountain View, CA 94043 (US)**

(72) Inventors:
• **HONG, Danny
  Mountain View, California 94043 (US)**
• **ZHAO, Yinqing
  Mountain View, California 94043 (US)**
• **TAHASILDAR, Ramachandra
  Mountain View, California 94043 (US)**
• **CHONG, In Suk
  Mountain View, California 94043 (US)**

(74) Representative: **Maikowski & Ninnemann
Patentanwälte Partnerschaft mbB
Postfach 15 09 20
10671 Berlin (DE)**

(56) References cited:
US-A1- 2015 124 870    US-A1- 2020 068 197
US-A1- 2020 137 389    US-A1- 2020 137 390

## Description

BACKGROUND

Cloud-based gaming platforms involve executing portions of or entire video game applications on remote servers to facilitate playing the video game application on a local client device. The remote servers provide audio and video rendered from executing video game applications as audio and video streams over a network to the local client device. In providing these audio and video streams, the remote servers employ the use of various encoder operations to compress gaming frames and audio in real-time before they are streamed. For low-latency cloud gaming applications, it is desirable to ensure that the encoder operations do not compress a gaming frame at a number of bits that will cause the stream to need more bandwidth than the available network allows.

Unlike general video streaming applications where some delay is tolerated, cloud-based gaming requires that real-time interactivity be maintained. To address this, some cloud-based gaming platforms call for every frame to be encoded very close to a target frame size that matches the currently available network bandwidth. Encoding the frame at a size other than the target frame size can result in either undershooting (resulting in less bits than allowed) or overshooting (resulting in more bits than allowed), with overshooting potentially leading to packet losses and delays that degrade the gaming experience.

US 2020/0068197 A1 discloses a multimedia system that allocates, during encoding of a multimedia stream, bits to portions of frames based on quality metrics and bit usages for different quantization parameters (QPs). An encoder of the multimedia system encodes a frame in a first pass with a first QP and in a second pass with a second QP. A comparator of the multimedia system measures and compares quality metrics, such as mean squared error, for each portion of the frame encoded with the first QP and the second QP. The comparator compares the difference between the quality metrics for each portion encoded with each QP to a threshold. If the difference in quality metrics for a portion exceeds the threshold, the comparator selects the portion for inclusion in a subset of portions to be encoded with the second QP.

US 2020/0137389 A1 discloses systems, apparatuses, and methods for generating a model for determining a quantization strength to use when encoding video frames. A pre-encoder performs multiple encoding passes using different quantization strengths on a portion or the entirety of one or more pre-processed video frames. The pre-encoder captures the bit-size of the encoded output for each of the multiple encoding passes. Then, based on the multiple encoding passes, the pre-encoder generates a model for mapping bit-size to quantization strength for encoding video frames or portion(s) thereof. When the encoder begins the final encoding pass for one or more given video frames or any portion(s) thereof, the encoder uses the model to map a preferred bit-size to a given quantization strength. The encoder uses the given quantization strength when encoding the given video frame(s) or frame portion(s) to meet a specified bit-rate for the encoded bitstream.

US 2015/0124870 A1 discloses a video encoding method for encoding a stream of baseband video data. The stream of baseband video data is received as a plurality of coding units. Statistics of each coding unit in the plurality of coding units are gathered. A quantization parameter (QP) for each coding unit is determined from the corresponding statistics. The coding unit is trial encoded using the QP to generate a trial encoded coding unit; and the QP is updated based on the trial encoded coding unit. Trial encoding the coding unit and updating the QP are repeated until the trial encoded coding unit meets a predetermined criterion. Then the coding unit is final encoded using the updated QP to generate a final encoded coding unit.

US 2020/0137390 A1 discloses systems, apparatuses, and methods for calculating a quantization parameter (QP) for encoding video frames to meet a given bit budget. Control logic coupled to an encoder calculates a complexity indicator that represents a level of difficulty in encoding a previous video frame. The complexity indicator is based at least in part on a first parameter associated with the previous video frame and corresponds to one or more of a variance, an intra-prediction factor, and an inter-to-intra ratio. The complexity indicator is then used by the control logic to calculate a preferred QP to use to encode the current video frame to meet a given bit budget. By using the preferred QP generated based on the complexity indicator, the encoder is able to make fewer QP adjustments during the frame. This helps to improve the visual quality of the resulting encoded video bitstream.

SUMMARY

The proposed solution relates to a computer-implemented method of claim 1.

A computer-implemented method of the proposed solution includes performing a first pass encoding on a first frame of a set of frames for a streaming application and determining an initial quantization parameter based on the first pass encoding, i.e., using the result of first pass encoding. The method also includes deriving an alternative quantization parameter for the first frame based on at least one other frame of the set of frames. For example, an alternative quantization parameter for the first frame may be derived by using the initial quantization parameter as a start value for determining the alternative quantization taking into account an encoding result of at least one other frame of the set of frames. This may, for example, include determining one or more differences of the first frame to at least one previously encoded frame of the set frames and calculating an alternative quantization parameter being higher or lower than the initial quantization parameter depending on the one or more determined differences (e.g., differences in complexity). Additionally, the method includes performing a first encoding of the first frame using the initial quantization parameter to produce a first encoded frame and performing a second encoding of the first frame based on the alternative quantization parameter to produce a second encoded frame. Also, the method includes selecting between the first encoded frame and the second encoded frame for transmission as part of an encoded stream based on the streaming application. Further, the method includes transmitting the encoded stream. Based on the proposed solution a multi-try encoding process may be proposed including selecting an applicable encoded frame from multiple encoded frames for inclusion in a resulting stream.

In the method of the proposed solution, determining an initial quantization parameter based on the first pass encoding can include determining an estimated complexity for the first frame based on the first pass encoding. Additionally, the method includes determining a historical complexity associated with the at least one other frame and comparing the estimated complexity to the historical complexity. A historical complexity may for example be determined by a complexity of at least one previously encoded frame of the set of frames (and thus of at least one encoded frame preceding the first frame). In an example embodiment, the determined historical complexity may be calculated as an average for one or more historical complexities of previously encoded frames of the set of frames and comparing this average to the estimated complexity of the first frame currently to be encoded.

Further, the method includes determining a value for the alternative quantization parameter less than the initial quantization parameter in response to the historical complexity being greater than the estimated complexity. Also, the method includes determining a value for the alternative quantization parameter greater than the initial quantization parameter in response to the historical complexity being less than the estimated complexity.

In the method, the streaming application can include at least one of a target (frame) size (e.g., in bits), a target efficiency, a target reliability, or a target latency. For the streaming application one or more requirements, settings, or preferences may be predetermined, such as a target quality for the encoded frames, a target efficiency for the encoded frames, a target reliability for the encoded stream, or a target latency for the encoded stream. To help assure that, for example, a resulting encoded stream meets these one or more requirements, settings, or preferences of the streaming application, each frame may be encoded according to a rate control scheme so that each encoded frame is compressed to be close in size to a predetermined target bit size. In an example embodiment, this may result in selecting between the first encoded frame and the second encoded frame depending on determined frame sizes for first and second frames having a size between a target frame size and a tolerance. For example, in the method, selecting between the first encoded frame and the second encoded frame for transmission in an encoded stream based on the streaming application can thus include determining a target frame size based on the streaming application and comparing each of the first and second encoded frames to the target frame size. Selecting between the first encoded frame and the second encoded frame for transmission in an encoded stream can also include selecting the encoded frame that does not exceed an allowed number of bits based on the available bandwidth.

In the method, the alternative quantization parameter can be one of a plurality of alternative quantization parameters. Accordingly, a plurality of alternative quantization parameters may be derived based on the initial quantization parameter for encoding the first frame.

Further, the method can include deriving the plurality of alternative quantization parameters according to the set of frames. In an example embodiment, different, in particular two or more, alternative quantization parameters may be calculated based on different previously encoded frames of the set of frames.

Additionally, the encoded stream may be encoded based on a target bitrate. The method can additionally include comparing each the first and second encoded frames to the target bitrate and selecting between the first encoded frame and the second encoded frame further in response to the comparison of each the first and second encoded frames to the target bitrate.

In general, the encoded stream can be associated with a gaming session. Further, the first frame can represent at least a portion of a virtual environment associated with the gaming session. Additionally, the encoded stream may be transmitted to a client device associated with the gaming session.

Furthermore, a computer-implemented method is disclosed which includes determining an initial quantization parameter associated with a first frame of a set of frames. Additionally, such a method includes deriving an alternative quantization parameter for the first frame based on the initial quantization parameter. Accordingly, an alternative quantization parameter for the first frame may be derived by using the initial quantization parameter as a start value for determining the alternative quantization. This may, for example, include determining one or more deltas (delta values) to be added to or subtracted from the initial quantization parameter for the first frame for determining the one or more alternative quantization parameters. The additionally disclosed method also includes performing both a first encoding of the first frame based on the initial quantization parameter to produce a first encoded frame and a second encoding of the first frame based on the alternative quantization parameter to produce a second encoded frame. Both the first and second encodings may thus be performed by using the initial quantization parameter or alternative quantization parameter, respectively in an encoding operation. The additionally disclosed method additionally includes selecting between the first encoded frame and the second encoded frame for transmission as part of an encoded stream in response to a comparison of the first encoded frame and the second encoded frame to a target frame size. Also, the method can include transmitting the encoded stream.

In the method, determining the initial quantization parameter can include performing a first pass encoding on the first frame to produce a first pass encoded frame and determining the initial quantization parameter using the first pass encoded frame. Further, the method can include determining an estimated complexity for the first frame based on a statistic of the first pass encoded frame and determining the initial quantization parameter based upon the estimated complexity. Accordingly, the method can include determining an estimated complexity for the first frame by at least one parameter of a determined statistic of the first pass encoded frame being indicative for an amount or value of information in a frame that differs from one or more reference frames associated with the frame (e.g., used to encode the frame). The determined statistic of the first pass encoded frame may, for example, include a bit size of the first pass encoded frame, an energy of the first pass encoded frame, a signal-to-noise ratio of the first pass encoded frame, or any combination thereof. The initial quantization parameter shall then depend from the estimated complexity.

Further, in the method, deriving the alternative quantization parameter can also include determining a historical complexity associated with at least one other frame of the set of frames and comparing the historical complexity to the estimated complexity of the first frame. A historical complexity may for example be determined by a complexity of at least one previously encoded frame of the set of frames (and thus of at least one encoded frame preceding the first frame). In an example embodiment, the determined historical complexity may be calculated as an average for one or more historical complexities of previously encoded frames of the set of frames and comparing this average to the estimated complexity of the first frame currently to be encoded.

Also, the method can include selecting the alternative quantization parameter from between a first candidate alternative quantization parameter and a second candidate alternative quantization parameter in response to the comparison of the historical complexity to the estimated complexity of the first frame. As an example, the first candidate alternative quantization parameter can be greater than the initial quantization parameter and the second candidate alternative quantization parameter can be less than the initial quantization parameter. Further, the method can include selecting the second alternative quantization parameter in response to the historical complexity being greater than an estimated complexity of the first frame. Additionally, the method can include selecting the first alternative quantization parameter in response to the historical complexity being less than an estimated complexity of the first frame.

Methods herein can further include decoding the encoded stream to produce a decoded stream and displaying the decoded stream. Generally, the first encoding and the second encoding can both be performed within a predetermined duration. Additionally, the first encoding and the second encoding can be performed concurrently. Also, methods herein can include determining a complexity of the selected encoded frame and storing a representation of the complexity in a memory buffer. Further, methods herein can include performing a second (multi-try) encoding operation on a second frame of the set of frames using the stored representation of the complexity. Methods herein can further include determining an applicable quantization parameter of the selected encoded frame and storing the applicable quantization parameter in a memory buffer. Methods herein can also include performing a second (multi-try) encoding operation on a second frame of the set of frames using the stored applicable quantization parameter. According to embodiments, a representation of the complexity for a selected (applicable) encoded frame may thus be determined and stored in a memory buffer for use as a historical complexity in the encoding of a subsequent frame of the set of game frames. Likewise, in embodiments, a selected quantization parameter associated with the selected encoded frame (i.e., the quantization parameter used to encode the selected encoded frame) may be stored in a memory buffer for use as a historical quantization parameter in the encoding of a subsequent frame of the set of game frames.

According to example embodiments, a system can include one or more processors and a memory coupled to the one or more processors. The memory can store executable instructions configured to manipulate the one or more processors to perform the methods disclosed herein.

In additional example embodiments, a system can include a network interface couplable to a network and an encoder coupled to the network interface. The system may be configured to perform the methods disclosed herein.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a block diagram of a cloud-based gaming system employing a multi-try encoding technique, in accordance with some embodiments.

FIG. 2 is a block diagram of a computing device configured to encode and stream frames within a cloud-based gaming system, in accordance with some embodiments.

FIG. 3 is a flow diagram illustrating a method for a multi-try encoding of a frame of a set of frames, in accordance with some embodiments.

FIG. 4 is a flow diagram illustrating an example determination of an initial quantization parameter for multi-try encoding, in accordance with some embodiments.

FIG. 5 is a flow diagram illustrating an example selection of an applicable encoded frame for multi-try encoding, in accordance with some embodiments.

FIG. 6 is a flow diagram illustrating an example of a multi-try encoding process, in accordance with some embodiments.

DETAILED DESCRIPTION

Techniques and systems described herein address the demands of providing a video stream from one or more servers to a client system while maintaining the requirements, settings, and preferences of the streaming application. In particular, such techniques and systems described herein allow for encoding a set of frames at a server using a multi-try encoding operation to determine an applicable quantization parameter for each frame of the set of frames based on the streaming application. To better ensure that the resulting video stream meets the requirements, settings, and preferences of the streaming application, an initial quantization parameter for each frame is determined based on an estimated complexity determined during a first pass encoding. From the initial quantization parameter, additional, alternative quantization parameters are derived for each frame based on the encoding history of previously encoded frames from the set of frames. Encoders then perform multiple encodings of each frame according to the respective initial and alternative quantization parameters to produce multiple encoded frames. An applicable encoded frame is then selected from these encoded frames according to the streaming application. In this way, each frame is more accurately allocated the number of bits needed to result in a video stream that better meets the requirements, settings, and preferences of the streaming application.

To facilitate understanding, the techniques of the present disclosure are described in the example context of a cloud gaming system. A cloud-based or other remote server renders a stream of video frames representing the visual content of a video game instance being executed at that server or a related server and then encodes each frame using a multi-try encoding process described herein to generate a bitstream representing a stream of encoded rendered game frames for transmission to one or more client devices via one or more networks. However, it will be appreciated that the systems and techniques described herein are not limited to this example context, but instead may be implemented in any of a variety of video stream encoding/decoding systems using the guidelines provided herein.

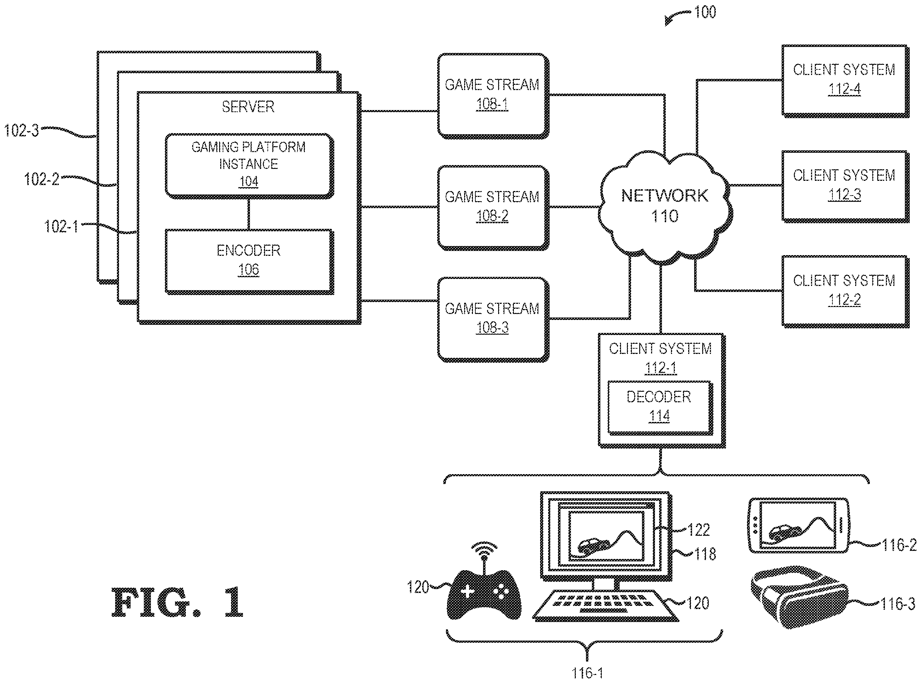

FIG. 1 illustrates a cloud-based gaming system 100 for single-player or multiplayer (including massively multiplayer) gaming, according to some embodiments. Cloud-based gaming system 100 includes one or more servers 102, with each server 102 communicatively coupled to one or more client systems 112 by at least one network 110. Network 110 is configured to allow for the transmission and reception of data between any of servers 102 and client systems 112 and includes, for example, wired and wireless networks, such as Ethernet, the Internet, Wi-Fi, or any combination thereof. In embodiments, each server 102 is communicatively interconnected via a high-bandwidth, low-latency inter-server messaging bus. Servers 102 are typically distributed in one or more data centers over a geographical area so as to reduce transmission latency through physical proximity. Though in the illustrated embodiment, three servers 102-1, 102-2, and 102-3 are presented supporting four client systems 112-1, 112-2, 112-3, and 112-4, in other embodiments, any number of servers may be implemented supporting any number of client devices. It will be appreciated that in a typical real-world implementation, the quantity of servers 102 and quantity of client systems 112 typically will be considerably higher than presented in the example of FIG. 1.

In the depicted embodiment, each server 102 includes a computing device such as, for example, a cloud server, virtual server, or any combination thereof configured to support one or more client gaming sessions executed on one or more client systems 112. A "client gaming session", as used herein, includes a gaming application being played, partially simulated, or fully simulated on client system 112. Each server 102 is configured to support this client gaming session by executing a corresponding game platform instance 104 that facilitates the execution of at least a portion of the gaming application being played, partially simulated, or fully simulated on the client system 112. Such facilitation can include performing one or more operations related to the gaming application, such as, for example, rendering one or more frames related to the gaming application, performing calculations related to the gaming application (e.g., lighting calculations, artificial intelligence calculation, physics calculations, shading calculations, input calculations, and the like), providing access to files, or any combination thereof, to name a few. The game platform instance 104 provides various software and hardware resources to achieve such facilitation, such as communication/network management, resource management, media rendering encoding, and the like. **In** this way, game platform instance 104 simulates the execution of one or more operations of the gaming application for a corresponding player as though that gaming application was being played on a local gaming device, such as a personal computer ("PC"), game console, smartphone, tablet computer, automotive entertainment system, and the like.

Each client system 112 represents the hardware and software resources utilized to receive player input through manipulation of one or more input/output devices for at least one player, as well as to present the video and audio content representing the visual and auditory content, respectively, of the gameplay for the at least one player. Examples of a client system 112 include one or more desktop computers, notebook computers, tablet computers, virtual-reality systems, augmented reality systems, a compute-enabled cellular phone (i.e., a "smartphone"), a compute-enabled television (i.e., a "smart TV"), or any combination thereof, to name a few. As illustrated with reference to client system 112-1, each client system 112 includes one or more client devices 116. **In** the illustrated embodiment, client system 112-1 comprises a first client device 116-1, which is communicatively coupled to, or otherwise associated with, display 118, at least one input device 120 (e.g., a gamepad, joystick, keyboard, mouse, touchscreen), one or more network interfaces configured to couple to the network connecting the client system 112 to a corresponding server 102, one or more processors, memory, storage, speakers, and other computing resources to render, process, and display scenes of a virtual environment. As illustrated with reference to client system 112-1, each client system 112 can include a decoder 114 configured to decode one or more frames related to a virtual environment. Decoder 114 can include hardware and software configured to decode one or more encoding streams (e.g., game streams 108) received from servers 102 so as to produce a decoded set of frames or decoded stream. Each decoder 114 is configured to decode any encoded frame encoded by any method or process disclosed herein. **In** embodiments, client system 112-1 further comprises a smartphone client device 116-2, and a wearable virtual reality client device 116-3, each of which may operate as an integrated mobile computing device having input facilities, output facilities, display facilities, and communication facilities analogous to those noted above with respect to client system 112-1. **In** certain embodiments, client systems 112-1, 112-2, and 112-3 may include one or more facilities such as accelerometers, Global Positioning System (GPS) devices, and the like that are used to acquire motion data representing a movement of the client device, as well as a rate or acceleration of such movement.

While certain aspects described herein will be discussed with specific reference to cloud gaming scenarios, it will be appreciated that in certain embodiments the described techniques may be utilized in various non-gaming scenarios, such as if one or more of servers 102 and client systems 112 operate to render, process, and display other types of informational, educational, recreational and/or artistic content. **It** will therefore be further appreciated that while techniques are discussed herein with respect to the rendering of content that may utilize particular examples relevant to cloud gaming and gaming content, such discussions and techniques may be applied to such non-gaming scenarios. Examples provided herein may refer to scenarios involving the rendering, processing, and display of gaming content due to particular bandwidth and network latency issues relevant to such content and should not be construed to indicate that the techniques described are limited to those scenarios.

During operation, each server 102 executes a gaming platform instance 104 for one or more client gaming sessions. Executing game platform instance 104 includes rendering a set of frames that includes one or more gaming frames associated with the gaming application being executed on one or more respective client systems 112. Each rendered gaming frame depicts at least a portion of a virtual environment used in the gaming application executed on the client system 112. For example, each rendered gaming frame can depict at least a portion of a virtual environment displayed on a display 118 of a client system 112 during the client gaming session.

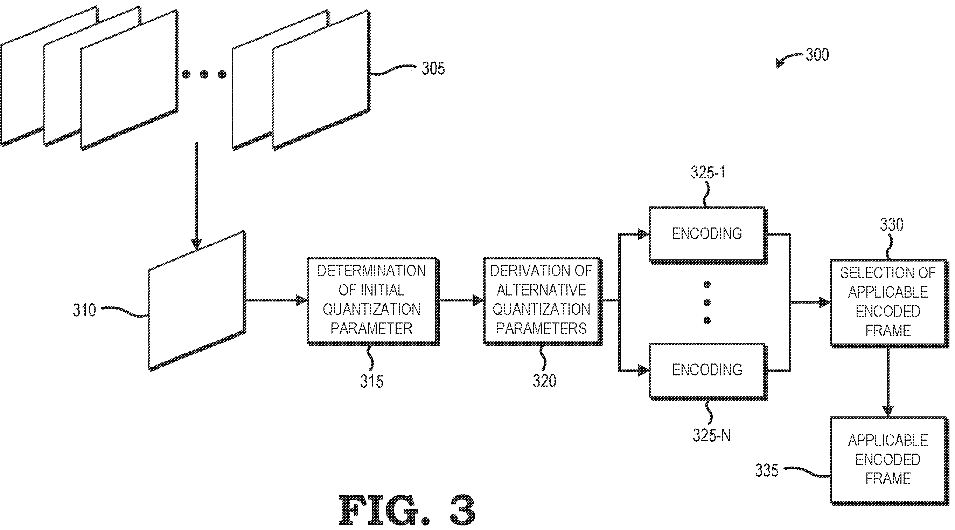

Each server 102 is configured to encode each rendered gaming frame via encoder 106 so as to generate a respective encoded set of frames (also referred to herein as "game stream" 108). Each server 102 is configured to encode a game stream 108 through, for example, compression, reorganization, and manipulation of each frame rendered by gaming platform instance 104. In embodiments, each encoder 106 of a server 102 implements one or more codecs so as to encode one or more rendered frames according to the one or more codecs. Such codecs can include H.264, H.265, VP9, AV1, or any combination thereof, to name a few. According to embodiments, each server 102 is configured to encode each frame rendered by gaming platform instance 104 using a multi-try encoding process which includes performing multiple encodings on a frame and selecting between those multiple encodings according to the current streaming application. As discussed in detail below with reference to FIG. 3, a multi-try encoding process includes determining an initial quantization parameter and alternative quantization parameters for a current frame and performing multiple encodings of the current frame according to the determined initial quantization parameter and the alternative quantization parameters to produce multiple encoded frames. The multi-try encoding process further includes selecting an applicable encoded frame from the multiple encoded frames for inclusion in a resulting game stream 108. Each resulting game stream 108 corresponds to a gaming application being executed on one or more client systems 112 and is provided to these corresponding client systems 112 via network 110. The corresponding client systems 112 are each configured to decode a received game stream 108 via a decoder 114 and display the resulting decoded set of frames 122 on, for example, a display 118. Each client system 112 is configured to decode a respective game stream 108 by compression, reorganization, and manipulation of the frames within the encoded stream according to one or more various video codecs including lossless and lossy codecs. According to embodiments, each client system 112 includes a decoder that implements one or more codecs so as to decode a received game stream 108 according to the one or more codecs. Such codecs can include H.264, H.265, VP9, AV1, or any combination thereof, to name a few. Though three game streams 108-1, 108-2, 108-3 are depicted in the illustrated embodiment, in other embodiments, servers 102 can generate any number of game streams 108 each corresponding to one or more client gaming sessions.

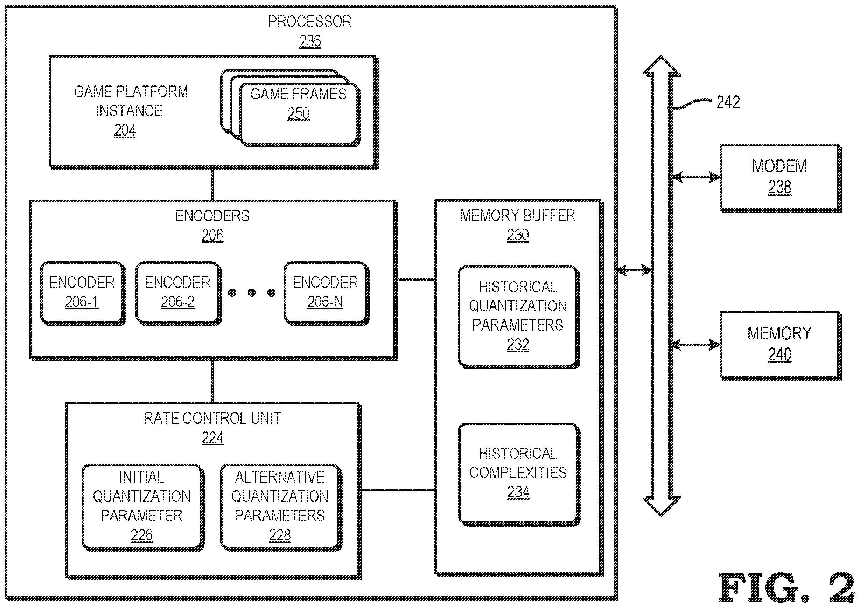

Referring now to FIG. 2, a computing device 200 configured to encode and stream frames within a cloud-based gaming system is illustrated. In embodiments, computing device 200 implements aspects of cloud-based gaming system 100 as described in FIG. 1. For example, computing device 200 may be similar or the same as server 102 described in FIG. 1. Computing device 200 includes one or more software and hardware components for bi-directional communications including components for encoding a set of game frames 250 such as to produce a game stream 108. In some embodiments, computing device 200 is part of an electronic device that supports encoding of a set game frames 250, including, for example, a desktop computer, a notebook computer, a tablet, a server, or a game console, to name a few. In embodiments, computing device 200 includes processor 236, modem 238, and memory 240. Memory 240 includes an electronic storage device, such as for example, a solid-state drive, a hard disk drive, random access memory ("RAM"), read-only memory ("ROM"), electronically erasable programmable ROM ("EEPROM"), optical storage device, or any combination thereof. Memory 240 includes instructions and data related to the operation of game platform instance 204, encoders 206, and rate control unit 224 such as, for example, codecs, reference frames, gaming engines, gaming applications, constants, and the like. Modem 238 is configured to be communicatively coupled to one or more client systems 112 via a network 110 and further configured to transmit a game stream 108 to the one or more client systems 112. According to embodiments, processor 236, modem 238, and memory 240 are internally in electronic communication via one or more interfaces (e.g., a bus 242).

According to embodiments, processor 236 includes one or more control processing units ("CPUs"), microprocessors, field-programmable gate arrays ("FPGAs"), graphics processing units ("GPUs"), application specific integrated circuits (ASICs), or any combination thereof and is configured to render and encode gaming frames for use in a client gaming session on cloud-based gaming system 100. Processor 236 operates to execute a game platform instance 204, the same or similar as game platform instance 104, associated with a current client gaming session and configured to support a gaming application executed on one or more client systems 112. Game platform instance 204 includes graphics hardware and software (not shown for clarity) to render a set of game frames 250 associated with an environment of the gaming application executed on the one or more client devices. Such graphics hardware and software include, for example, graphics cores, processing cores, pixel shaders, video random access memory ("VRAM"), GPUs, physics engines, lighting engines, tessellation engines, and the like. Each rendered game frame of the set of game frames 250 represents at least a portion of a virtual environment associated with the gaming application executed on the client device. For example, if the gaming application is a racing game, each game frame of the set of game frames 250 represents at least a portion of a racetrack, car, or surrounding area.

Each rendered game frame of the set of game frames 250 is provided to encoders 206 for encoding into a game stream 108. Encoders 206 includes one or more software and/or hardware encoders (e.g., encoders 325-1 to 325-N) configured to encode game stream 108 according to, for example, interframe and intraframe techniques. Though in the illustrated embodiment, three encoders 206-1, 206-2, and 206-N are presented, in other embodiments, any number of encoders may be implemented. To reduce the bandwidth needed to transmit a game stream 108 between computing device 200 and one or more client systems 112, encoders 206 encode game stream 108 by compressing one or more game frames of the set of game frames 250. Compressing a game frame includes comparing the game frame to one or more reference frames stored in memory buffer 230 and encoding one or more of the differences between the game frame and the one or more reference frames into game stream 108. Encoders 206 are further configured to encode the reference frames used into game stream 108. In embodiments, encoders 206 are configured to encode game stream 108 based on one or more streaming applications. A "streaming application" as used herein, includes one or more requirements, settings, preferences, or any combination thereof, for a resulting game stream 108 associated with a current client gaming session. These one or more requirements, settings, preferences are based on, for example, a gaming application associated with the client gaming session, hardware capabilities, codecs implemented by encoders 206, or any combination thereof and include, for example, a target quality for the encoded frames of a game stream 108, a target efficiency for the encoded frames of a game stream 108, a target reliability of a game stream 108, or a target latency for a game stream 108. To help assure that a resulting game stream 108 meets one or more requirements, settings, or preferences of the streaming application, encoders 206 are configured to encode each frame according to a rate control scheme so that each encoded frame is compressed to be close in size to a predetermined target bit size. The rate control scheme is implemented by rate control unit 224 which includes one or more processors, hard-coded logic, programmable logic, or any combination thereof, configured to control, or adjust, the bitrate and a number of respective bits (i.e., degree of compression) at which to encode a current frame of the set of game frames 250. Rate control unit 224 controls or adjusts the bitrate and the number of respective bits by determining an applicable quantization parameter ("QP") for the current frame.

In embodiments, rate control unit 224 determines the applicable QP for a current frame based on a multi-try encoding operation performed by encoders 206. The multi-try encoding operation includes encoders 206 performing multiple encodings on a current frame to produce multiple encoded frames. Each of the encoders 206 performs an encoding on the current frame according to a respective QP to produce multiple encoded frames (i.e., a plurality of encoded frames), with one encoder using an initial QP and one or more other encoders using alternative QPs. For example, a first encoder 206-1 performs an encoding on the current frame using an initial QP and a second encoder 206-2 performs an encoding on the current frame using an alternative QP. Rate control unit 224 then selects an applicable encoded frame from the resulting encoded frames based on the streaming application, with the applicable encoded frame representing the applicable QP (i.e., the QP used to encode the applicable encoded frame). It is important that rate control unit 224 selects an encoded frame from the resulting encoded frames that best meets one or more requirements, settings, or preferences of a streaming application application. For example, rate control unit 224 selects a resulting encoded frame that does not exceed an allowed number of bits based on the available bandwidth.

Rate control unit 224 determines the initial QP for a current frame based on a complexity of the current frame. A "complexity", as used herein, refers to an amount or value of information in a frame that differs from one or more reference frames associated with the frame (e.g., used to encode the frame). In this way, the higher the complexity of the frame, the more information within the frame exists for the encoders 206 to encode. In embodiments, rate control unit 224 determines an initial QP for a current frame according to the equation:

$$[EQ1] \quad t = \left( {a_1}/{QP} + {a_2}/{QP^2} \right) * c$$

wherein t represents a predetermined, desired frame size, or degree of compression, for an encoded frame, $a_1$ and $a_2$ represent predetermined constants derived from past encoded frames' data, and c represents a complexity, or distortion, of the current frame. In embodiments, rate control unit 224 is configured to determine an estimated complexity for a current frame based upon a first pass encoding of the current frame by encoders 206. In some embodiments, encoders 206 perform the first pass encoding at a lower resolution such as by first downsampling the current frame before the first pass encoding. The first pass encoding produces a first pass encoded frame that includes one or more statistics such as, for example, a bit size of the first pass encoded frame, an energy of the first pass encoded frame, a signal-to-noise ratio of the first pass encoded frame, or any combination thereof, to name a few. According to embodiments, rate control unit 224 is configured to determine an estimated complexity for the current frame based on the statistics of the first pass encoded frame. For example, rate control unit 224 determines an estimated complexity for the current frame based on the bit size of the first pass encoded frame. From the estimated complexity, rate control unit 224 determines an initial QP for the current frame. For example, rate control unit 224 determines an initial QP for the current frame according to the equation presented in EQ1 using the estimated complexity as complexity c.

From the initial QP, rate control unit 224 derives one or more alternative QPs for the current frame. The rate control unit 224 derives the one or more alternative QPs based on the complexities of one or more previously encoded frames from the set of game frames 250 (also referred to herein as "historical complexities" 234), the applicable QPs of one or more previously encoded frames from the set of game frames 250 (also referred to herein as "historical QPs" 232), one or more codecs implemented by encoders 206, or any combination thereof. For example, rate control unit 224 derives one or more alternative QPs for a current frame by comparing the estimated complexity of the frame to one or more historical complexities 234. In embodiments, deriving the alternative QPs includes rate control unit 224 determining whether an alternative QP is to be greater than or less than the initial QP of the current frame. For example, in response to a historical complexity being less than the estimated complexity of the current frame, rate control unit 224 determines that an alternative QP greater than the initial QP is to be derived. Such a determination typically is necessary when an odd number of alternative QPs are to be derived. Deriving the alternative QPs also includes determining one or more differences, or deltas, relative to the initial QP. In embodiments, these differences, or deltas, are based on one or more codecs implemented by encoders 206, hardware specifications, or both. Rate control unit 224 applies the deltas to the initial QP to determine the values for one or more alternative QPs. In other words, rate control unit 224 determines values for alternative QPs relative to the initial QPs according to the determined deltas.

Multiple encoders 206 then perform multiple encodings on the current frame according to the initial QP and the alternative QPs, respectively, to produce a plurality of encoded frames. In embodiments, the encoders 206 performing the multiple encodings are each configured to complete their respective encodings within a predetermined time frame. That is to say, the encoders 206 complete all the multiple encodings within a predetermined time frame. According to embodiments, encoders 206 are configured to perform one or more of the multiple encodings concurrently. Rate control unit 224 then selects an applicable encoded frame from the plurality of encoded frames that best meets one or more requirements, settings, or preferences of a streaming application. In embodiments, rate control unit 224 selects an applicable encoded frame from the plurality of encoded frames by comparing each of the encoded frames to a target bitrate that represents the one or more requirements, settings, or preferences of a streaming application. That is to say, a target bitrate that helps encoders 206 to produce a game stream 108 that meets one or more requirements, settings, or preferences of a streaming application. According to embodiments, rate control unit 224 compares each of the encoded frames to a range derived from a target bitrate and an overshoot factor. An "overshoot factor," as used herein, represents a tolerance within cloud-based gaming system 100 for overshoots (i.e., when at least a portion of a game stream 108 requires more bandwidth than allowed).

In embodiments, the applicable encoded frame is included in game stream 108 for transmission to one or more client systems 112. According to embodiments, a representation of the complexity for the applicable encoded frame is determined and stored in memory buffer 230 for use as a historical complexity 234 in the encoding of a subsequent frame of the set of game frames 250. Likewise, in embodiments, the applicable QP associated with the applicable encoded frame (i.e., the QP used to encode the applicable encoded frame) is stored in memory buffer 230 for use as a historical QP 232 in the encoding of a subsequent frame of the set of game frames 250.

Referring now to FIG. 3, a flow diagram for a multi-try encoding operation 300 is illustrated. For ease of illustration, the multi-try encoding operation 300 is described with reference to the computing device 200 of FIG. 2 implemented as a server 102 in the cloud-based gaming system 100 of FIG. 1. In operation 300, the game platform instance 204 renders a set of frames 305 for a client gaming session associated with a gaming application running on one or more client systems 112. Each frame of the set of frames 305 represents at least a portion of a virtual environment related to the gaming application. To facilitate the transmission of the set of frames 305 to the client system executing the gaming application, encoders 206 encode each frame of the set of frames 305 using a multi-try encoding operation 300. In doing so, the resulting game stream 108 can better meet the one or more requirements, settings, or preferences of a streaming application. For example, the bandwidth of a resulting game stream 108 can be more closely matched to the actual available bandwidth.

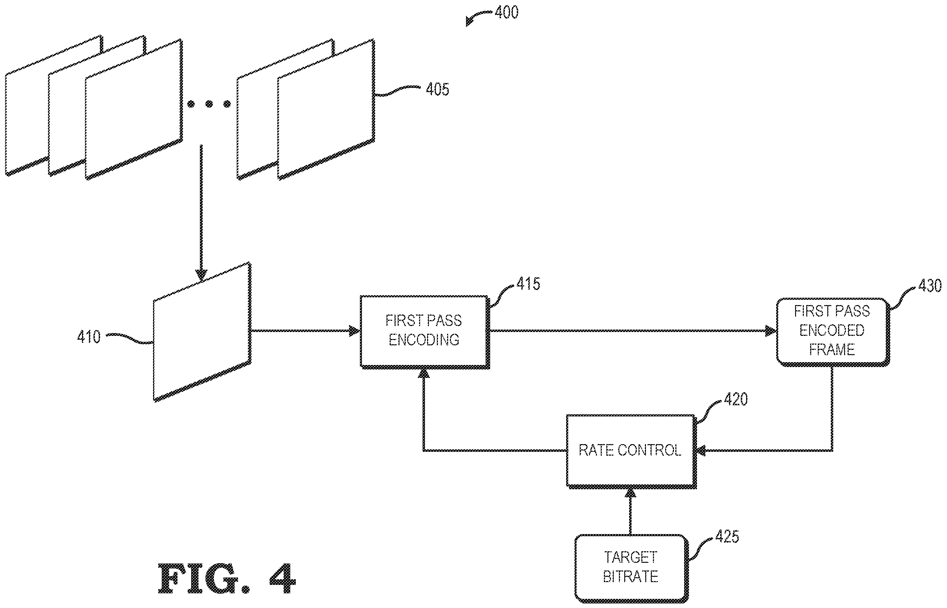

For a current frame (also referred to herein as a "first frame") 310 of the set of frames 305, rate control unit 224 performs a determination 315 of an initial quantization parameter for the current frame 310. In embodiments, rate control unit 224 performs the determination 315 of an initial quantization parameter for the current frame 310 based on a first pass encoding of the current frame (i.e., first frame) 310. For example, referring now to FIG. 4, a flow diagram of an example determination 400 of an initial quantization parameter is illustrated. For a current frame (also referred to herein a "first frame") 410 of a set of frames 405, similar or the same as current frame 310 and set of frames 305, respectively, the encoders 206 perform a first pass encoding 415 based on rate control 420. Rate control 420 includes rate control unit 224 determining initial QPs for the one or more encoders 206 to encode the set of frames 405. For the current frame (i.e., first frame) 410, rate control unit 224 first determines a first pass QP based on one or more codecs implemented by encoders 206, target bitrate 425, or both. Target bitrate 425 represents a bitrate for a resulting game stream 108 that helps the game stream 108 meet the one or more requirements, settings, or preferences of the streaming application. According to some embodiments, the first pass QP is a constant value determined from the codecs implemented by the encoders 206. After rate control unit 224 has determined the first pass QP, encoders 206 perform the first pass encoding 415 on the current frame 410 according to the first pass QP so to produce a first pass encoded frame 430. The first pass encoded frame 430 includes one or more statistics such as, for example, the bit size of the first pass encoded frame, an energy of the first pass encoded frame, a signal-to-noise ratio of the first pass encoded frame, or any combination thereof, to name a few. Based on the statistics of the first pass encoded frame 430 and the target bit rate, rate control unit 224 adjusts the rate control 420 by determining an initial QP for the current frame 410. That is to say, rate control unit 224 determines an initial QP for the current frame 410 based on the statistics of the first pass encoded frame 430 and the target bit rate. According to embodiments, determining an initial QP includes rate control unit 224 determining an estimated complexity of the current frame 410 according to the statistics of the first pass encoded frame 430. For example, rate control unit 224 determines an estimated complexity for the current frame 410 based on the bit size of the first pass encoded frame 430. In embodiments, rate control unit 224 then determines an initial QP from the estimated complexity and the target bitrate 425.

Referring again to FIG. 3, after an initial QP is determined for the current frame 310, rate control unit 224 performs a derivation 320 of one or more alternative QPs for the current frame 310. According to embodiments, rate control unit 224 performs the derivation 320 of one or more alternative QPs based on the initial QP produced from the determination 315. In embodiments, rate control unit 224 performs the derivation 320 of one or more alternative QPs by first determining the number of alternative QPs to produce. In other words, rate control unit 224 determines how many alternative QPs are to be derived from the initial QP. In some embodiments, the number of alternative QPs is a predetermined value. According to embodiments, rate control unit 224 determines whether one or more of the alternative QPs to be derived will be greater than the initial QP or less than the initial QP. For example, when the number of alternative QPs to be derived is 1, rate control unit 224 determines whether that alternative QP will be greater or less than the initial QP. That is to say, for example, rate control unit 224 selects between a candidate alternative QP greater than the initial QP and a candidate alternative QP less than the initial QP. Rate control unit 224 determines whether one or more of the alternative QPs will be greater than the initial QP or less than the initial QP by comparing one or more historical complexities 234 associated with the set of frames 305 to the estimated complexity of the current frame 310, comparing one or more historical QPs 232 associated with the set of frames 305 to the initial QP of the current frame 310, or both. In embodiments, this comparison includes, for example, determining one or more trends, averages, modes, medians, or any combination thereof, in the historical complexities 234 and historical QPs 232 and comparing those trends, averages, modes, medians, or any combination thereof, to an estimated complexity or initial QP of the current frame 310. For example, comparing one or more historical complexities 234 associated with the set of frames 305 to the estimated complexity of the current frame 310 includes determining an average for one or more historical complexities 234 and comparing the average to the estimated complexity of the current frame 310. Based on the comparison of the one or more historical complexities 234 associated with the set of frames 305 to the estimated complexity of the current frame 310 or the one or more historical QPs 232 associated with the set of frames 305 to the initial QP of the current frame 310, rate control unit 224 determines whether one or more of the alternative QPs will be greater than the initial QP or less than the initial QP (e.g., selects between a first candidate alternative QP greater than the initial QP and a second candidate alternative QP less than the initial QP). For example, in response to the comparison indicating that the current frame 310 has a higher complexity than previously encoded frames from the set of frames 305, rate control unit 224 determines that one or more of the alternative QPs will be greater than the initial QP, such as, for example, to compensate for the increase in complexity. Likewise, for example, in response to the comparison indicating that the current frame 310 has a lower complexity than previous encoded frames from the set of frames 305, rate control unit 224 determines that one or more of the alternative QPs will be less than the initial QP. As another example, in response to the initial QP of the current frame 310 being less than one or more historical QPs 232, rate control unit 224 determines that one or more of the alternative QPs will be greater than the initial QP such as, for example, to aid in avoiding overshoots in the resulting game stream 108.

In embodiments, rate control unit 224 further derives the alternative QPs by determining one or more differences, or deltas, relative to the initial QP. In embodiments, these differences, or deltas, are based on one or more codecs implemented by encoders 206, hardware, or both. Based on these deltas, rate control unit 224 determines the values for one or more alternative QPs. In other words, rate control unit 224 determines values for alternative QPs relative to the initial QPs according to the determined deltas.

After rate control unit 224 determines the one or more alternative QPs for the current frame 310, encoders 206 perform multiple encodings 325-1 to 325-N on the current frame according to the initial QP and the alternative QPs to produce a plurality of encoded frames. According to embodiments, respective encoders of encoders 206 perform an encoding 325 according to either the initial QP or a respective alternative QP. For example, encoder 206-1 performs an encoding 325 on the current frame 310 according to the initial QP, and encoder 206-2 performs an encoding 325 on the current frame 310 according to an alternative QP. In embodiments, encoders 206 are configured to perform all the encodings 325-1 to 325-N within a predetermined time frame or amount of time. Further, in some embodiments, encoders 206 are configured to perform one or more of the encodings 325 concurrently.

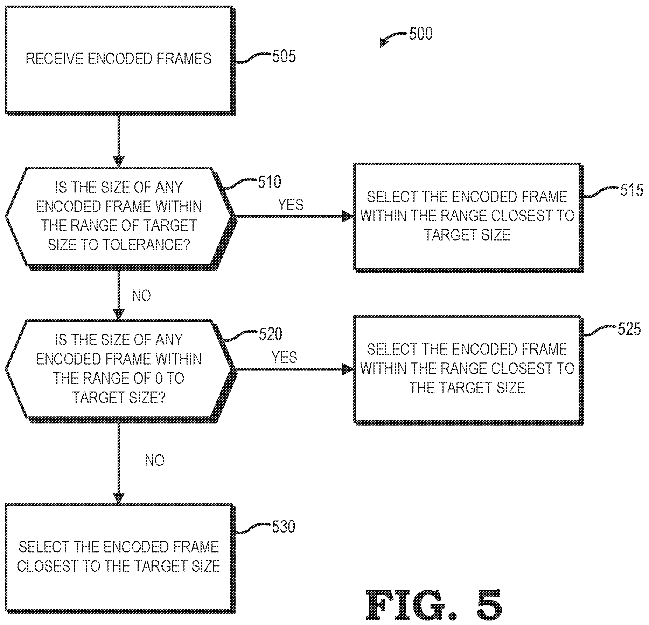

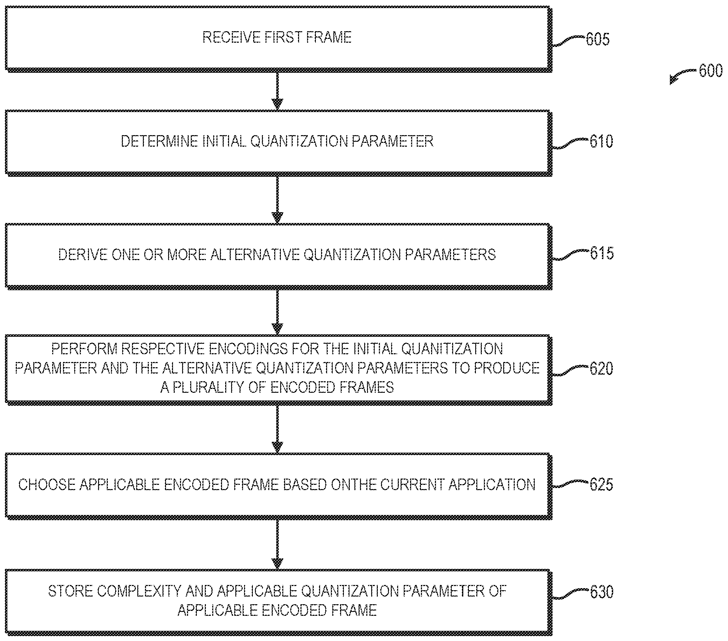

From the resulting encoded frames produced by the multiple encodings 325, rate control unit 224 performs a selection 330 of an applicable encoded frame according to the streaming application. For example, rate control unit 224 selects the encoded frame that best helps the resulting game stream 108 meet the one or more requirements, settings, or preferences of the streaming application. In embodiments, rate control unit 224 selects the applicable encoded frame based on the target bitrate and a tolerance associated with the cloud-based gaming system 100. As an example, referring now to FIG. 5, an example selection 500 of an applicable encoding is presented. At block 505, rate control unit 224 receives the plurality of encoded frames produced from the multiple encodings 325. At block 510, rate control unit determines whether any of the encoded frames of the plurality of encoded frames have a size between a target frame size and a tolerance. That is to say, rate control unit 224 determines whether there is a group of encoded frames within the plurality of encoded frames that each have a size between a target frame size and a tolerance. In some embodiments, rate control unit 224 determines the target frame size based on the target bitrate with the target frame size indicating how many bits an encoded frame is allowed without exceeding the available bandwidth. The tolerance represents the number of bits the cloud-based gaming system 100 can tolerate according to its overshoot factor. In embodiments, rate control unit 224 determines the tolerance according to the equation:

$$[EQ2] \; Tolerance = f * \mathrm{T}$$

wherein f represents the overshoot factor for the cloud-based gaming system 100 and T represents the target frame size. If any of the encoded frames from the plurality of encoded frames has a size between the target frame size and the tolerance (e.g., between [T, Tolerance]), rate control unit 224 moves to block 515. At block 515, from the group of encoded frames having a size between the target frame size and the tolerance, rate control unit 224 selects the encoded frame closest in size to the target frame size to produce applicable encoded frame 335. If none of the encoded frames from the plurality of encoded frames have a size between the target frame size and the tolerance rate, rate control unit 224 moves to block 520.

At block 520, rate control unit 224 determines whether the size of any of the encoded frames is between 0 and the target size (e.g., between [0, T]). That is to say, rate control unit 224 determines whether there is a group of encoded frames within the plurality of encoded frames that each have a size between 0 and a target frame size. If any of the encoded frames from the plurality of encoded frames have a size between 0 and the target frame size, rate control unit 224 moves to block 525. At block 525, from the group of encoded frames having a size between 0 and the target size, rate control unit 224 selects the encoded frame having a size closest to the target frame size to produce applicable encoded frame 335. If none of the encoded frames from the plurality of encoded frames have a size between 0 and the target frame size, rate control unit 224 moves to block 530. At block 530, from the plurality of encoded frames (i.e., all the encoded frames produced during the multiple encodings), rate control unit 224 selects the encoded frame having a size closest to the target bitrate to produce applicable encoded frame 335.

Referring again to FIG. 3, in embodiments, the applicable encoded frame 335 is transmitted as part of a resulting game stream 108 to one or more client systems 112. According to embodiments, rate control unit 224 stores the applicable QP of the applicable encoded frame 335 (i.e., the QP used to encode the applicable encoded frame 335) in memory buffer 230 for use as a historical QP 232 to encode subsequent frames from the set of frames 305. In embodiments, rate control unit 224 determines a complexity for the applicable encoded frame 335 based on the applicable QP, the reference frames used to encode the applicable encoded frame 335, or both. Rate control unit 224 stores the determined complexity for the applicable encoded frame 335 in memory buffer 230 for use as a historical complexity 234 to encode subsequent frames from the set of frames 305.

Referring now to FIG. 6, a flow diagram illustrating an example multi-try encoding method 600 is presented. For ease of illustration, the method 600 is described with reference to the computing device 200 of FIG. 2 implemented as a server 102 of the system 100 of FIG. 1. At block 605, encoders, the same or similar as the encoders 206, receive a current frame (i.e., a first frame). The current frame represents at least a portion of a virtual environment associated with a client gaming session. At block 610, a rate control unit, similar or the same as rate control unit 224, determines an initial QP for the current frame. In embodiments, the rate control unit determines the initial QP based on an estimated complexity of the current frame and a target bitrate. The target bitrate represents a bitrate that aids in a resulting game stream 108 meeting the one or more requirements, settings, or preferences of a streaming application. According to embodiments, the rate control unit determines an estimated complexity of the current frame based on a first pass encoding of the current frame performed by the encoders. From the first pass encoding, the encoders produce a first pass encoded frame including one or more statistics such as, for example, the bit size, an energy, a signal-to-noise ratio, or any combination thereof, of the first pass encoded frame, to name a few. Based on the statistics of the first pass encoded frame, the rate control unit determines an estimated complexity for the current frame which is then used to determine an initial QP for the current frame.

At block 615, after determining an initial QP for the current frame, rate control unit 224 derives one or more alternative QPs for the current frame based on the initial QP. In embodiments, the rate control unit determines whether one or more alternative QPs will be greater or less than the initial QP for the current frame. For example, the rate control unit selects between a first candidate alternative QP greater than the initial QP and a second candidate alternative QP less than the initial QP. One of ordinary skill in the art will appreciate that such a determination is necessary when an odd number of alternative QPs are derived, such as, for example, when only one alternative QP is derived. According to embodiments, the rate control unit determines whether one or more alternative QPs will be greater or less than the initial QP based on a comparison of the estimated complexity of the current frame to one or more historical complexities 234, a comparison of the initial QP for the current frame to one or more historical QPs 232, or both. For example, in response to the initial QP for the current frame being less than one or more historical QPs 232, rate control unit 224 determines that an alternative QP will be greater than the initial QP such as, for example, to help prevent overshoots in the resulting game stream 108. According to embodiments, the rate control unit also determines one or more differences, or deltas, relative to the initial QP. In embodiments, these differences, or deltas, are based on one or more codecs implemented by the encoders, hardware specification, or both. Based on these deltas, the rate control unit determines the values for one or more alternative QPs relative to the initial QP.

At block 620, the encoders perform multiple, distinct encodings on the current frame according to the initial QP and the alternative QPs to produce a plurality of encoded frames. In embodiments, the multiple encodings include one or more respective encoders encoding the current frame according to the initial QP and one or more respective alternative QPs. According to embodiments, the encoders perform all of the multiple encodings within a predetermined amount of time. Further, in embodiments, one or more encoders perform their respective encodings concurrently. At block 625, the rate control unit selects an encoded frame from the plurality of encoded frames according to the streaming application to produce an applicable encoded frame. That is to say, the rate control unit selects an applicable encoded frame that best helps game stream 108 meet one or more requirements, settings, or preferences of a streaming application. In embodiments, selecting the applicable encoded frame includes the rate control unit determining whether the size of one or more encoded frames of the plurality of encoded frames are within ranges based on a target frame size determined from the target bitrate and a tolerance. In other words, the rate control unit determines whether any sub-groups of encoded frames from the plurality of encoded frames are within these ranges. For example, the rate control unit determines whether the size of any encoded frames from the plurality of encoded frames is between the target frame size and the tolerance or between 0 and the target frame size. In response to the rate control unit determining that the size of one or more encoded frames is within a range, the rate control unit then selects the encoded frame from the sub-group closest in size to the target frame size to produce the applicable encoded frame. In response to the rate control unit determining that the size of none of the encoded frames of the plurality of encoded frames is within a range, the rate control unit selects the encoded frame from the plurality of encoded frames closest in size to the target frame size to produce the applicable encoded frame.

At block 630, the rate control unit determines a complexity for the applicable encoded frame based on the target bit rate, the reference frames used to encode the applicable encoded frame, or both. The complexity is then stored in a memory buffer (such as by storing a representation of the complexity in the memory buffer), similar to or the same as memory buffer 230, for use as a historical complexity for encoding a subsequent frame from the set of frames. Likewise, the rate control unit stores the applicable QP of the applicable encoded frame (i.e., the QP used to encode the applicable encoded frame) in the memory buffer for use as a historical QP for encoding a subsequent frame from the set of frames. A computer device, the same or similar as computing device 200, transmits the applicable encoded frame to one or more client systems 112 as part of game stream 108.

In some embodiments, certain aspects of the techniques described above may be implemented by one or more processors of a processing system executing software. The software comprises one or more sets of executable instructions stored or otherwise tangibly embodied on a non-transitory computer-readable storage medium. The software can include the instructions and certain data that, when executed by the one or more processors, manipulate the one or more processors to perform one or more aspects of the techniques described above. The non-transitory computer-readable storage medium can include, for example, a magnetic or optical disk storage device, solid-state storage devices such as Flash memory, a cache, random access memory (RAM), or other non-volatile memory device or devices, and the like. The executable instructions stored on the non-transitory computer-readable storage medium may be in source code, assembly language code, object code, or other instruction format that is interpreted or otherwise executable by one or more processors.

A computer-readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer-readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

## Claims

1. A computer- implemented method, comprising:

    performing a first pass encoding on a first frame (310, 410) of a set of frames (305, 405) for a streaming application;
    determining an initial quantization parameter (226) based on the first pass encoding;
    deriving an alternative quantization parameter (228) for the first frame based on at least one other frame of the set of frames;
    performing a first encoding of the first frame using the initial quantization parameter to produce a first encoded frame (430) and performing a second encoding of the first frame using the alternative quantization parameter to produce a second encoded frame;

selecting between the first encoded frame and the second encoded frame for transmission as part of an encoded stream (108) based on the streaming application; and

transmitting the encoded stream,

wherein determining an initial quantization parameter based on the first pass encoding comprises determining an estimated complexity for the first frame based on the first pass encoding; and

**characterized by**

deriving an alternative quantization parameter for the first frame based on at least one other frame of the set of frames comprises:

determining a historical complexity associated with the at least one other frame; and comparing the estimated complexity to the historical complexity, wherein in response to the historical complexity being greater than the estimated complexity, a value for the alternative quantization parameter less than the initial quantization parameter is determined, and, in response to the historical complexity being less than the estimated complexity, a value for the alternative quantization parameter greater than the initial quantization parameter is determined.

2. The method of claim 1, wherein the streaming application comprises at least one of a target size, a target efficiency, a target reliability, or a target latency.

3. The method of claim 1 or 2, wherein selecting between the first encoded frame and the second encoded frame for transmission in an encoded stream based on the streaming application further comprises:

determining a target frame size based on the streaming application; and comparing each of the first and second encoded frames to the target frame size.

4. The method of any of claims 1 to 3, wherein the alternative quantization parameter is one of a plurality of alternative quantization parameters.

5. The method of claim 4, further comprising:

deriving the plurality of alternative quantization parameters according to the set of frames, and/or

decoding the encoded stream to produce a decoded stream; and
displaying the decoded stream.

6. The method of any of claims 1 to 5, wherein the encoded stream is encoded for a target bitrate.

7. The method of claim 6, further comprising:

comparing each the first and second encoded frames to the target bitrate; and selecting between the first encoded frame and the second encoded frame further in response to the comparison of each the first and second encoded frames to the target bitrate.

8. The method of any of claims 1 to 7, wherein the encoded stream is associated with a gaming session.

9. The method of claim 8, wherein the first frame represents at least a portion of a virtual environment associated with the gaming session or the encoded stream is transmitted to a client device (112) associated with the gaming session.

10. The method of any of claims 1 to 9, wherein the first encoding and the second encoding are both performed within a predetermined duration and/or the first encoding and the second encoding are performed concurrently.

11. The method of any of claims 1 to 10, further comprising:

determining a complexity of the selected encoded frame; and storing a representation of the complexity in a memory buffer.

12. The method of claim 11, further comprising: performing a second encoding of a second frame of the set of frames based on the stored representation of the complexity.

13. The method of any of claim 1 to 12, further comprising:

determining an applicable quantization parameter of the selected encoded frame; and storing the applicable quantization parameter in a memory buffer.

14. The method of claim 13, further comprising: performing a second encoding of a second frame of the set of frames using the stored applicable quantization parameter.

15. A system comprising:

one or more processors (236); and a memory (238) coupled to the one or more processors and storing executable instructions configured to manipulate the one or more processors to perform the method of any of claims 1-14.

**Patentansprüche**

1. Computerimplementiertes Verfahren, umfassend:

   Durchführen einer ersten Pass-Codierung an einem ersten Rahmen (310, 410) eines Satzes von Rahmen (305, 405) für eine Streaming-Anwendung;
   Bestimmen eines initialen Quantisierungsparameters (226) basierend auf der ersten Pass-Codierung;
   Ableiten eines alternativen Quantisierungsparameters (228) für den ersten Rahmen basierend auf mindestens einem anderen Rahmen des Satzes von Rahmen;
   Durchführen einer ersten Codierung des ersten Rahmens unter Verwendung des initialen Quantisierungsparameters, um einen ersten codierten Rahmen (430) zu erzeugen, und Durchführen einer zweiten Codierung des ersten Rahmens unter Verwendung des alternativen Quantisierungsparameters, um einen zweiten codierten Rahmen zu erzeugen;
   Auswählen zwischen dem ersten codierten Rahmen und dem zweiten codierten Rahmen zum Übertragen als Teil eines codierten Datenstroms (108) basierend auf der Streaming-Anwendung; und
   Übertragen des codierten Stroms,
   wobei das Bestimmen eines initialen Quantisierungsparameters basierend auf der ersten Pass-Codierung das Bestimmen einer geschätzten Komplexität für den ersten Rahmen basierend auf der ersten Pass-Codierung umfasst; und
   **gekennzeichnet dadurch, dass**
   das Ableiten eines alternativen Quantisierungsparameters für den ersten Rahmen basierend auf mindestens einem anderen Rahmen des Satzes von Rahmen Folgendes umfasst:

      Bestimmen einer historischen Komplexität, die mindestens einem anderen Rahmen zugeordnet ist; und
      Vergleich der geschätzten Komplexität mit der historischen Komplexität, wobei als Reaktion darauf, dass die historische Komplexität größer als die geschätzte Komplexität ist, ein Wert für den alternativen Quantisierungsparameter bestimmt wird, der kleiner als die initiale Quantisierungspara-

   meter ist, und als Reaktion darauf, dass die historische Komplexität kleiner als die geschätzte Komplexität ist, ein Wert für den alternativen Quantisierungsparameter bestimmt wird, der größer als die initiale Quantisierungsparameter ist.

2. Verfahren nach Anspruch 1, wobei die Streaming-Anwendung mindestens eine Zielgröße, eine Zieleffizienz, eine Zielzuverlässigkeit oder eine Ziellatenz umfasst.

3. Verfahren nach Anspruch 1 oder 2, wobei das Auswählen zwischen dem ersten codierten Rahmen und dem zweiten codierten Rahmen zum Übertragen in einem codierten Strom basierend auf der Streaming-Anwendung ferner Folgendes umfasst:

      Bestimmen einer Zielrahmengröße basierend auf der Streaming-Anwendung; und
      Vergleichen jedes der ersten und zweiten codierten Rahmen mit der Zielrahmengröße.

4. Verfahren nach einem der Ansprüche 1 bis 3, wobei der alternative Quantisierungsparameter einer aus einer Vielzahl von alternativen Quantisierungsparametern ist.

5. Verfahren nach Anspruch 4, ferner umfassend:

      Ableiten der Vielzahl von alternativen Quantisierungsparametern gemäß dem Satz von Rahmen und/oder Decodieren des codierten Datenstroms, um einen decodierten Datenstrom herzustellen; und
      Anzeigen des decodierten Stroms.

6. Verfahren nach einem der Ansprüche 1 bis 5, wobei der codierte Strom für eine Ziel-Bitrate codiert wird.

7. Verfahren nach Anspruch 6, ferner umfassend:

      Vergleichen jedes der ersten und zweiten codierten Rahmen mit der Ziel-Bitrate; und
      Auswählen zwischen dem ersten codierten Rahmen und dem zweiten codierten Rahmen ferner als Reaktion auf den Vergleich jedes ersten und zweiten codierten Rahmens mit der Ziel-Bitrate.

8. Verfahren nach einem der Ansprüche 1 bis 7, wobei der codierte Datenstrom einer Spielesitzung zugeordnet ist.

9. Verfahren nach Anspruch 8, wobei der erste Rahmen mindestens einen Abschnitt einer virtuellen Umgebung darstellt, die der Spielesitzung zugeordnet ist, oder der codierte Strom an eine Client-Vorrichtung (112) übertragen wird, die der Spielesitzung zugeordnet ist.

10. Verfahren nach einem der Ansprüche 1 bis 9, wobei sowohl die erste Codierung als auch die zweite Codierung innerhalb einer vorbestimmten Dauer durchgeführt werden und/oder die erste Codierung und die zweite Codierung gleichzeitig durchgeführt werden.

11. Verfahren nach einem der Ansprüche 1 bis 10, ferner umfassend:

Bestimmen einer Komplexität des ausgewählten codierten Rahmens; und
Speichern einer Darstellung der Komplexität in einem Speicherbuffer.

12. Verfahren nach Anspruch 11, ferner umfassend:
Durchführen einer zweiten Codierung eines zweiten Rahmens des Satzes von Rahmen basierend auf der gespeicherten Darstellung der Komplexität.

13. Verfahren nach einem der Ansprüche 1 bis 12, ferner umfassend:

Bestimmen eines anwendbaren Quantisierungsparameters des ausgewählten codierten Rahmens; und
Speichern des anwendbaren Quantisierungsparameters in einem Speicherbuffer.

14. Verfahren nach Anspruch 13, ferner umfassend:
Durchführen einer zweiten Codierung eines zweiten Rahmens des Satzes von Rahmen unter Verwendung des gespeicherten anwendbaren Quantisierungsparameters.

15. System, umfassend:
einen oder mehrere Prozessoren (236); und einen Speicher (238), der mit dem einem oder mehreren Prozessoren gekoppelt ist und ausführbare Anweisungen speichert, die dazu konfiguriert sind, die einen oder mehrere Prozessoren zu manipulieren, um das Verfahren nach einem der Ansprüche 1-14 durchzuführen.

## Revendications

1. Procédé mis en œuvre par ordinateur, comprenant :

la réalisation d'un premier codage de passe sur une première trame (310, 410) d'un ensemble de trames (305, 405) pour une application de diffusion en continu ;
la détermination d'un paramètre de quantification initial (226) sur la base du premier codage de passe ;

la dérivation d'un paramètre de quantification alternatif (228) pour la première trame sur la base d'au moins une autre trame de l'ensemble de trames ;
la réalisation d'un premier codage de la première trame à l'aide du paramètre de quantification initial pour produire une première trame codée (430) et la réalisation d'un second codage de la première trame à l'aide du paramètre de quantification alternatif pour produire une seconde trame codée ;
la sélection entre la première trame codée et la seconde trame codée pour la transmission dans le cadre d'un flux codé (108) sur la base de l'application de diffusion en continu ; et
la transmission du flux codé,
dans lequel la détermination d'un paramètre de quantification initial sur la base du premier codage de passe comprend la détermination d'une complexité estimée pour la première trame sur la base du premier codage de passe ; et
**caractérisé par**
la dérivation d'un paramètre de quantification alternatif pour la première trame sur la base d'au moins une autre trame de l'ensemble de trames comprend :

la détermination d'une complexité historique associée à l'au moins une autre trame ; et
la comparaison de la complexité estimée à la complexité historique, dans lequel, en réponse au fait que la complexité historique est supérieure à la complexité estimée, une valeur pour le paramètre de quantification alternatif inférieure au paramètre de quantification initial est déterminée, et, en réponse au fait que la complexité historique est inférieure à la complexité estimée, une valeur pour le paramètre de quantification alternatif supérieure au paramètre de quantification initial est déterminée.

2. Procédé selon la revendication 1, dans lequel l'application de diffusion en continu comprend au moins l'une d'une taille cible, d'une efficacité cible, d'une fiabilité cible ou d'une latence cible.

3. Procédé selon la revendication 1 ou 2, dans lequel la sélection entre la première trame codée et la seconde trame codée pour la transmission dans un flux codé sur la base de l'application de diffusion en continu comprend également :

la détermination d'une taille d'image cible sur la base de l'application de diffusion en continu ; et
la comparaison de chacune des première et seconde images codées à la taille de l'image cible.

**4.** Procédé selon l'une quelconque des revendications 1 à 3, dans lequel le paramètre de quantification alternatif est l'un d'une pluralité de paramètres de quantification alternatifs.

**5.** Procédé selon la revendication 4, comprenant également :

la dérivation de la pluralité de paramètres de quantification alternatifs sur la base de l'ensemble de trames, et/ou le décodage du flux codé pour produire un flux décodé ; et l'affichage du flux décodé.

**6.** Procédé selon l'une quelconque des revendications 1 à 5, dans lequel le flux codé est codé pour un débit binaire cible.

**7.** Procédé selon la revendication 6, comprenant également :

la comparaison de chaque première et seconde trame codée au débit binaire cible ; et la sélection entre la première trame codée et la seconde trame codée en réponse à la comparaison de chacune des première et seconde trames codées au débit binaire cible.

**8.** Procédé selon l'une quelconque des revendications 1 à 7, dans lequel le flux codé est associé à une session de jeu.

**9.** Procédé selon la revendication 8, dans lequel la première trame représente au moins une partie d'un environnement virtuel associé à la session de jeu ou le flux codé est transmis à un dispositif client (112) associé à la session de jeu.

**10.** Procédé selon l'une quelconque des revendications 1 à 9, dans lequel le premier codage et le second codage sont tous les deux effectués au cours d'une durée prédéterminée et/ou le premier codage et le second codage sont réalisés simultanément.

**11.** Procédé selon l'une quelconque des revendications 1 à 10, comprenant également :

la détermination d'une complexité de la trame codée sélectionnée ; et le stockage d'une représentation de la complexité dans une mémoire tampon.

**12.** Procédé selon la revendication 11, comprenant également : la réalisation d'un second codage d'une seconde trame de l'ensemble de trames sur la base de la représentation stockée de la complexité.

**13.** Procédé selon l'une quelconque des revendications 1 à 12, comprenant également :

la détermination d'un paramètre de quantification applicable de la trame codée sélectionnée ; et le stockage du paramètre de quantification applicable dans une mémoire tampon.

**14.** Procédé selon la revendication 13, comprenant également : la réalisation d'un second codage d'une seconde trame de l'ensemble de trames à l'aide du paramètre de quantification applicable stocké.

**15.** Système comprenant : un ou plusieurs processeurs (236) ; et une mémoire (238) couplée à un ou plusieurs processeurs et stockant des instructions exécutables configurées pour faire en sorte que les un ou plusieurs processeurs réalisent le procédé selon l'une quelconque des revendications 1 à 14.

FIG. 1

FIG. 2

FIG. 3

**FIG. 4**

EP 4 397 038 B1

```
                                                         ╭─ 500
┌──────────────────────────┐
│                          │
│   RECEIVE ENCODED FRAMES │──── 505
│                          │
└──────────────────────────┘
             │
             ▼
    ┌──────────────────────┐                    ┌──────────────────────────┐
   ╱ IS THE SIZE OF ANY     ╲── 510             │  SELECT THE ENCODED FRAME │── 515
  ╱  ENCODED FRAME WITHIN    ╲      YES          │  WITHIN THE RANGE CLOSEST TO │
  ╲  THE RANGE OF TARGET     ╱─────────────────▶ │  TARGET SIZE             │
   ╲ SIZE TO TOLERANCE?     ╱                    └──────────────────────────┘
    └──────────────────────┘
             │
            NO
             ▼
    ┌──────────────────────┐                    ┌──────────────────────────┐
   ╱ IS THE SIZE OF ANY     ╲── 520             │  SELECT THE ENCODED FRAME │── 525
  ╱  ENCODED FRAME WITHIN    ╲      YES          │  WITHIN THE RANGE CLOSEST TO │
  ╲  THE RANGE OF 0 TO       ╱─────────────────▶ │  THE TARGET SIZE         │
   ╲ TARGET SIZE?           ╱                    └──────────────────────────┘
    └──────────────────────┘
             │
            NO
             ▼
┌──────────────────────────┐
│  SELECT THE ENCODED FRAME │── 530
│  CLOSEST TO THE TARGET SIZE │
│                          │
└──────────────────────────┘
```

**FIG. 5**

EP 4 397 038 B1

```
┌─────────────────────────────────────────────────────────────┐
│                    RECEIVE FIRST FRAME                        │──605
└─────────────────────────────────────────────────────────────┘
                              │                          ⤺600
                              ▼
┌─────────────────────────────────────────────────────────────┐
│           DETERMINE INITIAL QUANTIZATION PARAMETER            │──610
└─────────────────────────────────────────────────────────────┘
                              │
                              ▼
┌─────────────────────────────────────────────────────────────┐
│       DERIVE ONE OR MORE ALTERNATIVE QUANTIZATION PARAMETERS  │──615
└─────────────────────────────────────────────────────────────┘
                              │
                              ▼
┌─────────────────────────────────────────────────────────────┐
│  PERFORM RESPECTIVE ENCODINGS FOR THE INITIAL QUANITIZATION   │
│ PARAMETER AND THE ALTERNATIVE QUANTIZATION PARAMETERS TO PRODUCE │──620
│            A PLURALITY OF ENCODED FRAMES                      │
└─────────────────────────────────────────────────────────────┘
                              │
                              ▼
┌─────────────────────────────────────────────────────────────┐
│ CHOOSE APPLICABLE ENCODED FRAME BASED ONTHE CURRENT APPLICATION │──625
└─────────────────────────────────────────────────────────────┘
                              │
                              ▼
┌─────────────────────────────────────────────────────────────┐
│  STORE COMPLEXITY AND APPLICABLE QUANTIZATION PARAMETER OF    │──630
│              APPLICABLE ENCODED FRAME                         │
└─────────────────────────────────────────────────────────────┘
```

**EP 4 397 038 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200068197 A1
- US 20200137389 A1
- US 20150124870 A1
- US 20200137390 A1